Europäisches Patentamt

European Patent Office

Office européen des brevets

(19)

(11) Publication number: **0 071 365**
**B1**

(12) **EUROPEAN PATENT SPECIFICATION**

(45) Date of publication of patent specification: **29.10.86**

(51) Int. Cl.⁴: **C 12 C 11/04, C 12 Q 1/02**

(21) Application number: **82303689.2**

(22) Date of filing: **14.07.82**

(54) Improvements in or relating to home brewing.

(30) Priority: **23.07.81 GB 8122738**

(43) Date of publication of application:
**09.02.83 Bulletin 83/06**

(45) Publication of the grant of the patent:
**29.10.86 Bulletin 86/44**

(84) Designated Contracting States:
**AT BE CH DE FR GB IT LI LU NL SE**

(56) References cited:
**FR-A-2 457 076**
**GB-A-1 201 183**
**GB-A-1 323 622**
**GB-A-1 492 992**
**US-A-2 694 641**
**US-A-3 760 711**
**US-A-3 946 780**

(73) Proprietor: **SODASTREAM LIMITED**
**Morley Way**
**Woodston, Peterborough, PE2 OBS (GB)**

(72) Inventor: **Wilde, Peter Frederick**
**The Old Chapel Bagby**
**Thirsk North Yorkshire (GB)**

(74) Representative: **Simpson, Ronald Duncan Innes et al**
**A.A.Thornton & Co. Northumberland House**
**303-306 High Holborn**
**London WCIV 7LE (GB)**

Courier Press, Leamington Spa, England.

## Description

This invention relates to improvements in the brewing of beers, wines, stouts, lagers, ciders and other alcoholic beverages and is of particular value to the amateur brewer or vintner who brews his alcoholic beverages at home.

Hitherto, the production of beers, wines and other alcoholic beverages by enthusiastic amateurs in the home, has required the purchase of two major groups of items viz. the raw material involved in the proposed fermentation and the equipment required within which the fermentation is to be prepared, carried out and concluded. The bewildering array of complex and varied materials available to the enthusiast is sufficient to support whole departments of chain store chemists and retailers specialising solely in this activity.

At its most complex, the "home brewing" of beers, can involve the enthusiast in the purchase of materials such as grain, malt, hops, finings of isinglass, yeasts, yeast growth stimulants, hop extracts, hop oils, and sugars — for example granulated, invert or glucose syrups. The production of wines in the home can involve the purchase of grape juice concentrate, sugars, yeasts, tannins, colourings, clarification aids and many other more or less vital ingredients. Simpler techniques require the purchase of "kits". These usually include a can of fermentable material, such as grape juice or concentrated malt extract with or without added hop extracts, in an appropriate quantity to make a recommended volume of wine or beer, for example as described in British Patent Specification 1492992. The yeast is invariably packed separately from the fermentable material.

The process of fermentation requires the enthusiast to provide a container of sufficient size to contain the fermentable material in solution, in water, to which the yeast is finally added and to contain the mixture during fermentation. The vessels sold for this purpose are usually of semirigid polyethylene or similar plastics material and are often furnished with a vent at the top (to allow the egress of the copious amounts of carbon dioxide produced during the fermentation) and a tap at or near the bottom to allow the withdrawal of the brew after fermentation. It is normally recommended, by kit manufacturers, that the brew be withdrawn into strong bottles, when fermentation has ceased. To the bottles is often added a small amount of sugar, before sealing, to encourage a second fermentation to take place, which has the effect of causing the carbon dioxide so produced to dissolve so as to (a) lower the pH of the brew and thereby encourage clarification and (b) cause the brew to effervesce when the bottle is opened and decanted into a glass prior to drinking.

Sterility and cleanliness of all equipment is vital to the production of good wines and beers. This can be accomplished by treating all equipment either with boiling water or a solution of sodium metabisulphite in water. This is, however, a step which is often either forgotten altogether by the amateur or carried out unsatisfactorily. A further disadvantage is that the various ingredients must be fixed in appropriate measured proportions with water at the required temperature and with extensive stirring, and then be transferred to the fermentation vessel.

So complicated is the production of wines and beers in the home that amateur brewers need to be enthusiastic and must demonstrate considerable skill in the sterilization, cleaning, measuring and handling of their fermentations before good beers and wines can be produced. Many potential home bewers fail to produce potable products and become disillusioned and abandon further attempts. Many people realising the complexity of the procedures, become intimidated by them and never even attempt the process.

It is an object of the invention to overcome these disadvantages by eliminating to a great extent the measuring, sterilisation, decanting, bottling, secondary fermentation, ingredient purchasing, mixing, boiling etc, which hitherto have bedeviled the homebrewer.

The use of sterile, disposable plastic bags as fermenting vessels has been proposed, for example in British Patent Specifications 1201183 and 1323622 and US Patent 3946780, the bags having inlet openings provided with removable closures and incorporating pressure relief valves, to permit the exhaust of carbon dioxide. However the use of such disposable bags as fermenters assist only with the problem of ensuring that the fermenter is sterile when the fermentation broth is fed into it.

The present invention provides a brewing kit comprising a fermenting vessel constituted by a collapsible plastics bag having an inlet opening provided with removable closure, and having a pressure relief valve.

The invention is characterized in that the closed bag contains a loose mixture of fermentable materials and yeast in pre-measured amounts such as to yield a fermentation mixture only after dilution with water, the interior of the bag being substantially sterile, and the bag being in a substantially collapsed condition, whereby fermentation can be initiated merely by opening the bag and introducing water to contact and dilute the loose mixture, with concomitant expansion of the bag.

The kit may thus be purchased in a collapsed, easily portable condition and all that is required of the user is to remove a closure, add a suitable quantity of fresh water, reclose the bag and wait for fermentation to complete itself.

The term "sterile" as used herein is intended to mean that the container is sufficiently clean to maintain the purity of the yeast culture contained therein. Under such conditions of purity the yeast will have a life of at least 1 year. No additional sterilisation, with for example metabisulphite, is necessary before the brewing procedure takes place.

The term "fermentable material" as used herein is meant to include concentrated malt extract as is used conventionally in the brewing of beers, stouts and lagers, and also concentrated grape juice extract as is used conventionally in the brewing of wine. The term is also meant to include dried grape juice. Depending on the product required, the yeast may be brewer's yeast or vintner's yeast preferably in the dry granular form. The concentrated malt extract may be provided as an extremely viscous concentrate or as a dried powder. Dried or concentrated apple juice solids may also be used if cider is to be brewed.

The relative proportions of the ingredients forming the contents of the container may vary widely depending upon the nature of the alcoholic beverage being made. Typically, however, the container may include from 10 to 2000 parts by weight of concentrated fermentable material and from 10 to 2000 parts by weight of sugar per part by weight of dry yeast solids, the ratio by weight of the concentrated fermentable material to the sugar being in the range from 1:8 to 8:1. Similarly the amount of water added to the container to cause fermentation may also vary widely and typically this may be such that the fermentation mixture contains from 2.1 to 49 parts by weight of water per part by weight of solids (fermentable material plus sugar). The container may additionally include premeasured amounts of burnt sugar and/or hop extract and/or hop oil and/or oatmeal extract and/or fruit flavourings and/or yeast growth stimulants or promoters and/or finings (isinglass) and/or salts and/or tannins and/or citric acid and/or colouring and/or other ingredients as are conventionally used to produce alcoholic beverages of different character. The container may also include a sterilising agent such as sodium metabisulphite in case the water subsequently admitted when fermentation is desired is non-sterile.

The ingredients in the container do not include added water, although some water may of course inevitably be present as a component of the concentrated fermentable material or as water of crystallisation of the sugar. Certainly the sugar concentration must be too high to permit fermentation to occur until such time as the appropriate or recommended amount of water is added.

It is worthy of note that the yeast can be present in the container in the form of an intimate mixture with the other ingredients provided that these ingredients are in a suitably concentrated form.

Typically, fermentation of fermentable material by yeast admixed therewith will not occur spontaneously provided that the fermentable material has a solids content of 70% w/v or more. It is desirable that this solids content should be as high as possible and thus in a preferred embodiment, powdered (belt dried or spray dried) malt extracts are used which have a solids content in excess of 94% w/v. Likewise it is preferred for the sugar to be in the granulated or crystalline state. Sugar syrups of less than 70% w/v should be avoided. Similarly grape juice concentrates having a solids contents of less than about 70% are of little value if the yeast is to be intimately admixed therewith since spontaneous fermentation can occur, resulting in premature spoilage of the final wine.

By way, of example, the composition may comprise approximately 66% by weight of malt extract solids either in the form of a dry powder or as a solution in water of not less than 70% solids and approximately 33% by weight of dry sugar, with a minor amount of dried yeast. To provide a composition which only on dilution to 2 gallons (about 9 litres) with water would provide an appropriate fermentation mixture, the components of the composition may be present as 1250 g in total, comprising approximately 833 g of malt extract solids, the balance being dry sugar and about 1 g of dried yeast, the only water initially present being that added as part of the malt extract concentrate.

A feature of the composition is that the sugar concentration therein is sufficient to inhibit fermentation, that is to prevent the glycolysis reaction taking place which normally occurs between the sugar and the fermentable material, in the presence of yeast. The addition of water to dilute the composition produces a fermentation mixture in which the sugar concentration is reduced to a level which will permit glycolytic catalysis to occur, and hence alcohol production to take place. Typically in the case where the fermentable material is malt extract, the specific gravity of the malt extract concentrate is about 1.4 while that of the diluted fermentation mixture is about 1.02—1.09.

The container is preferably in the form of a bag formed from a sheet of plastics material which is impermeable to water, oxygen and carbon dioxide and having a size sufficient to hold a predetermined recommended quantity of liquid, for example 2 gallons (about 9 litres) or 5 gallons (about 22 litres) but any volume would be feasible. The filling means may consist of a neck formed in the bag wall and a closure member thereof which may be in the form of a tap to allow the brew to be removed. The bag is also furnished with a simple vent for the egress of carbon dioxide, in the form of a simple pressure relief valve.

It is sometimes desirable to maintain a positive pressure of carbon dioxide over fermenting solutions and it is normal practice to increase the concentration of carbon dioxide in the beer or wine prior to drinking. The pressure of carbon dioxide above the fermenting material increases carbonation or effervescence of the brew. This has the effect of increasing the sharp taste of the beer or wine, producing a "head" on the beer or wine and lowering its pH and, in consequence, increasing its clarity or brightness (flocculation and settling of "haze" materials in the brew is promoted by its lower pH). Pressures from about 1 to 15 psig (about 0.07 to 1.00 bars) are adequate. Unfortunately, a plastics bag of sufficient degree of inexpensiveness to be a disposable item, and yet capable of containing a pressure of even 1 psi (about 0.07 bar) is not generally available. In accordance with a preferred feature therefore, the bag is provided within a restraint, which though not necessarily airtight or water tight in its own right, is strong enough to support the bag which is, of itself, water and gas tight.

It is desirable, though not essential, for the container to be in the form of a bag made from a laminated material with the inner wall of the laminate being composed of low density polyethylene. This is desirable from the point of view of flexibility, toxicity, cost and heat sealing. However, polyethylene is extremely porous with respect to carbon dioxide and a bag composed entirely of polyethylene would be unlikely to sustain carbon dioxide pressure within itself for longer than a few hours. Preferably, therefore the outer wall of the laminate is composed of a material such as a linear polyester, aluminised polyester, polyvinylidene chloride, or linear polyamide (nylon) which confers not only structural strength to the bag, but also acts as a barrier to the diffusion of carbon dioxide. Clearly it is desirable on the grounds of cost to use the least feasible thickness of laminate, consistent with the pressures to be generated and enclosed within the bag.

A bag consisting of two layers of suitable polyethylene laminate layed with their polyethylene surfaces in contact and each having an area of 300 sq ins (about 1950 sq cm), for example of dimensions 24" × 12½" (about 61 × 32 cm), is adequate to (eventually) contain 10 litres of fermentation liquor, though in general a longer/narrower bag is preferred to a squarer bag. A bag of similar material of dimensions 18" × 30" (about 46 × 76 cms) is sufficient to eventually contain 22 litres of liquor.

The bag is preferably heat sealed around three edges, leaving one open end for the introduction of the fermentable material etc, whereafter it may also be heat sealed. It is particularly preferred for the air in the bag to be evacuated before it is finally sealed. The neck of the filling means is preferably heat sealed into the bag and allows the home brewer to introduce the prescribed amount of cold water into the bag and eventually obtain the resultant brew. The closure member for the neck preferably incorporates a tap to allow the contents to be removed as desired. Suitable taps for this purpose are the so-called "Press Taps" manufactured by Waddington and Duval. The neck should be positioned so that, when the contents are dispensed, settled yeasts and other material are below the level of the neck and are not disturbed by the outflow.

In use of the kit, no stirring or agitation is required to permit the fermentation reaction to take place, since the contents of the container may be in an intimately mixed form and the reaction takes place at the interface between these contents and the added water with the resultant formation of carbon dioxide bubbles. These bubbles rise to the surface, and in so doing carry yeast particles to the surface which subsequently fall, providing adequate and continuous mixing. Of course additional agitation may be provided if required.

Fermentation takes place under anaerobic conditions. This enhances the glycolytic pathway leading to the production of alcohol and impedes the oxidative respiration of the yeast, which would tend to use up the sugar but produce no alcohol.

The fermentation reaction generally subsides after about one week at room temperature, and thereafter the reaction mixture may be allowed to clear under gravity. Alternatively, finings may be added and these rapidly clear the mixture.

The beverage produced in accordance with the method of the present invention may be drunk directly or may be transferred for example into a bottle containing a small amount of sugar in order to permit secondary fermentation to take place, so enhancing effervescence in the beverage.

It is a particular feature of the invention that it enables alcoholic beverages to be produced without the need to carry out any process steps other than the addition of water, and that it includes no stage which is particularly messy. Moreover, the kit is easy to carry when purchased, and may be disposed of completely after use in normal household waste.

For a better understanding of the invention and to show how the same may be carried into effect, reference will now be made, by way of example, to the accompanying drawings in which:—

Figure 1 shows in diagrammatic form a kit according to the present invention; and

Figure 2 is a diagrammatic cross-section along line II—II of Figure 1 on an enlarged scale.

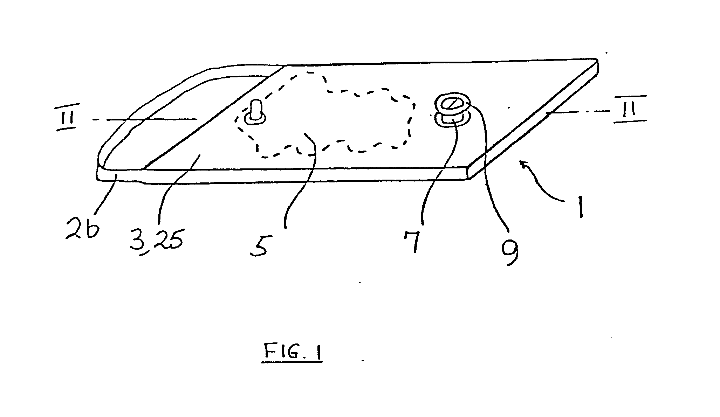

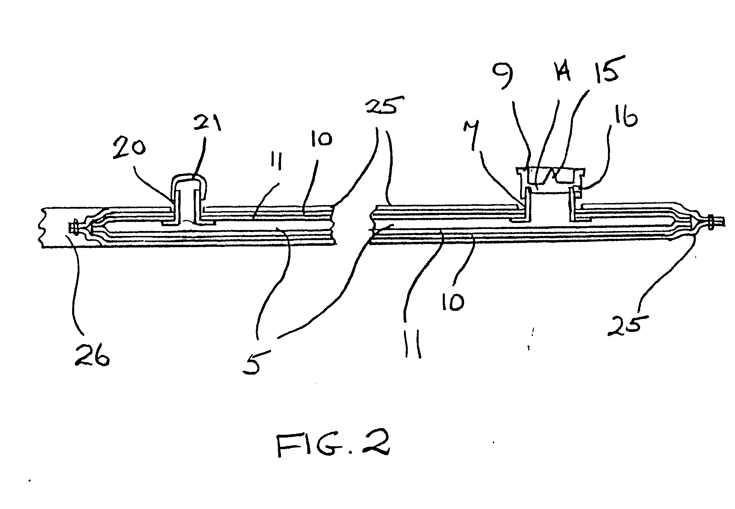

Referring to Figures 1 and 2 there is shown a brewing kit generally designated 1 comprising a container in the form of a plastics bag 3 in a flattened configuration, which bag contains an intimate mixture 5 of premeasured amounts of concentrated fermentable material, dry sugar, dried yeast, and other ingredients as hereinbefore described. The water and sugar contents of the mixture are such that the fermentation activity of the yeast is inhibited. The bag is provided with a filling means comprising a neck 7 closed by a removable tap 9. It also includes a pressure relief valve 20, 21.

The bag 3 is formed by superposing two generally rectangular sheets each formed by laminating together a 50 μm film of nylon 10 and a 30 μm film of polyethylene 11 and heat sealing the polyethylene faces of the sheets together at three edges.

The neck 7 is moulded from low density polyethylene and is secured to the bag by heat sealing. The tap 9 is in the form of a "Scholler" valve which is fitted to the neck. The "Scholler" valve includes a generally disc-like portion 14 which ordinarily forms a resilient liquid tight seal against the neck 7 when the valve is fitted to the neck. The disc like portion 14 can, however, be distorted by applying lateral pressure to upstanding limb 15 by means of the thumb or the like whereby the seal between the portion 14 and the neck 7 is broken to allow the contents of the bag to be removed *via* opening 16 in the closure member.

The pressure relief valve comprises a tube 20 moulded from low density polyethylene and secured to the bag by heat sealing. Mounted on the end of the tube 20 is a rubber teat having a dome 21. The rubber teat is manufactured by West Pharma Rubber Ltd, under the designation R9, and furnished with a pierced hole or cut.

In the manufacture of the kit, the mixture 5 is introduced into the bag 3 and the bag is evacuated before it is heat sealed along its remaining edge. The bag is then enclosed in an outer sack 25 provided with two apertures through which the filling means and pressure relief valve of the bag 1 protrude. The sack 25 is made of a fabric woven from an ethylene/propylene copolymer and coated with polyethylene. The sack 25 is slightly smaller than the bag 3 and its seams are sewn for increased strength. The sack has a strap 26 at one end.

In use of the kit, the neck 7 is opened thereby releasing the vacuum in the bag 3. An appropriate recommended amount of water is introduced into the bag 3 *via* the neck 7 and the tap 9 is then replaced. The dome 21 of the teat has already been pierced e.g. with a No. 16 syringe needle and the sack containing the bag is then hung up in a suitable place by the strap 26. The water dilutes the mixture 5 such that fermentation may commence and the pressure relief valve maintains the carbon dioxide content in the bag at the desired value. After completion of the fermentation, the brew is allowed to settle before it is dispensed from the tap 9.

The following Examples illustrate the invention.

### Example 1

A mixture of 1.8 Kg of EDME HOPPED MALT EXTRACT, 1 Kg of granulated sugar, 7 gms of dried yeast were introduced into a 22 litre plastics bag as described in the drawings. The bag was then sealed and enveloped in a strong sack as described. Subsequently, the contents were diluted with 20 lites of cold water *via* the removable tap. The dome of the rubber teat had been pierced and the bag and its contents were supported in a vertical position *via* the strap of the sack for two weeks. After this time, a clear, highly potable beer could be withdrawn from the tap on demand.

### Example 2

Example 1 was repeated using a mixture of 1450 gms Munton & Fison dry powdered Spraymalt A, 1 Kg sugar, 7 gms dried yeast pellets, 0.1 ml Isohopcon (a hop extract manufactured by Pauls & Whites Ltd, Reigate) and 0.01 ml essential oils of hops. The mixture was diluted to $22\frac{1}{2}$ litres with cold tap water. Fermentation for two weeks yielded $22\frac{1}{2}$ litres of excellent bright beer.

### Example 3

2 Kg of Spanish White Grape Juice concentrate having a specific gravity of 1.30 (70% solids approximately) was added to 450 grams of cane sugar and 20 grams of citric acid. The whole was mixed and poured into a 9 litre (capacity) bag as described in the drawings and being of dimensions 30 × 60 cms. The bag was sealed, and placed in an outer sack as described in the drawings. The dimensions of the outer sack were 29 × 59 cms.

Subsequently 28 gms of a proprietory wine yeast compound consisting of sugar, dried yeast, diammonium phosphate and ammonium chloride were added *via* the filling means and the whole was diluted to about 9 litres by cold water introduced *via* the filling means. The specific gravity of the diluted mixture was 1.085.

The mixture was allowed to ferment and the pressure of carbon dioxide within the bag was maintained throughout at 2—3 psi (about 0.13—0.2 Bar), by providing an approximately sized hole in the rubber dome of the pressure relief valve. After three weeks, a very potable and tasty wine of bright dry fruity character was obtained. It effervesced pleasantly in the glass on withdrawal from the bag *via* the tap. its specific gravity had declined to 1.001.

### Example 4

To a laminate bag closely contained in a smaller sack as described in the drawings was added a mixture of 1400 gms of white spray dried grape juice solids of Spanish origin, 560 gms of cane sugar, and 28 gms of a proprietory wine yeast compound (containing sugar, dried yeast, diammonium phosphate and ammonium chloride). The bag was then evacuated and sealed as previously described.

Several months later the contents of the bag were diluted to 9 litres by the simple addition of cold water *via* the filling means. The specific gravity of the diluted mixture was 1.09. The sack was supported by its strap from a hook on a wall at an ambient temperature of 17°C for 5 weeks. During fermentation, a pressure of 2—3 psi (about 0.13—0.2 Bar) developed within the bag and was restrained by the sack.

A wine of considerable excellence and flavour was obtained from the tap. The wine was bright and fruity and had a sparkling light character. Its specific gravity was 0.998.

### Claims

1. A brewing kit comprising a fermenting vessel constituted by a collapsible plastics bag having an inlet opening provided with a removable closure, and having a pressure relief valve, characterized in that the closed bag contains a loose mixture of fermentable materials and yeast in pre-measured amounts such as to yield a fermentation mixture only after dilution with water, the interior of the bag being substantially sterile, and the bag being in a substantially collapsed condition, whereby fermentation can be initiated merely by opening the bag and introducing water to contact and dilute the loose mixture, with concomitant expansion of the bag.

2. A brewing kit as claimed in Claim 1 characterized in that the loose mixture comprises concentrated malt extract having a solids content of not less than 70% w/v, dried malt extract or dried grape juice, and yeast and sugar in dry form.

3. A brewing kit as claimed in Claim 2, characterized in that the mixture comprises from 10 to 2000 parts by weight of concentrated fermentable material and from 10 to 2000 parts by weight of sugar per part by weight of said yeast, the ratio of concentrated fermentable material to sugar being from 1:8 to 8:1 by weight.

4. A brewing kit as claimed in Claim 1, 2 or 3 characterized in that the bag is enveloped in a restraint means to enable it to withstand the internal pressures to which it is subjected in use.

5. A brewing kit as claimed in Claim 4 characterized in that the restraint is in the form of a sack in which the bag is contained.

**Patentansprüche**

1. Braukit, enthaltend ein Gärgefäß, das von einem zusammenfaltbaren Plastiksack gebildet wird, mit einer Einlaßöffnung, die mit einem abnehmbaren Verschluß versehen ist, und einem Druckablaßventil, dadurch gekennzeichnet, daß der geschlossene Sack eine lose Mischung von gärfähigen Materialien und Hefe in vorabgemessenen Mengen enthält, um ein Gärungsgemisch nur nach Verdünnung mit Wasser zu ergeben, wobei der Innenraum des Sacks im wesentlichen steril ist und der Sack sich in einem im wesentlichen zusammengefalteten Zustand befindet, wodurch die Gärung durch bloßes Öffnen des Sacks und Einleiten von Wasser zur Berührung und Verdünnung des losen Gemischs bei gleichzeitiger Ausdehnung des Sacks in Gang gesetzt werden kann.

2. Braukit nach Anspruch 1, dadurch gekennzeichnet, daß das lose Gemisch konzentrierten Malzextrakt mit einem Feststoffgehalt von nicht weniger als 70% Gew./Volumen, getrockneten Malzextrakt oder getrockneten Traubensaft und Hefe und Zucker in trockener Form enthält.

3. Braukit nach Anspruch 2, dadurch gekennzeichnet, daß das Gemisch zwischen 10 und 2000 Gew.-Teile konzentriertes gärfähiges Material und zwischen 10 und 2000 Gew.-Teile Zucker pro Gew.-Teil der genannten Hefe enthält, wobei das Gewichtsverhältnis des konzentrierten gärfähigen Materials zu Zucker zwischen 1:8 und 8:1 liegt.

4. Braukit nach Anspruch 1, 2 oder 3, dadurch gekennzeichnet, daß der Sack in einer Verstärkungseinrichtung eingehüllt ist, um es ihm zu ermöglichen, den Innendrücken standzuhalten, denen er im Gebrauch ausgesetzt ist.

5. Braukit nach Anspruch 4, dadurch gekennzeichnet, daß die Verstärkung in Form eines Sacks ausgebildet ist, in welchem der Sack enthalten ist.

**Revendications**

1. Ensemble pour fermentation, comprenant un récipient de fermentation constitué par un sac de matière plastique qui peut être écrasé, ayant une ouverture d'entrée munie d'un organe amovible de fermeture, et ayant une soupape de décharge, caractérisé en ce que le sac fermé contient un mélange fluide de matières pouvant fermenter et de levures en quantités préalablement mesurées afin qu'elles forment un mélange de fermentation uniquement après dilution par de l'eau, l'intérieur du sac étant pratiquement stérile, le sac étant pratiquement à l'état affaissé, si bien que la fermentation peut être déclenchée simplement par ouverture du sac et introduction d'eau destinée, à être au contact du mélange fluide qui est ainsi dilué, avec dilatation correspondante du sac.

2. Ensemble de fermentation selon la revendication 1, caractérisé en ce que le mélange fluide contient un extrait concentré de malt ayant une teneur en matières solides qui n'est pas inférieure à 70 % en poids/volume, un extrait de malt séché ou du jus de raisin séche, et de la levure et du sucre sous forme séche.

3. Ensemble de fermentation selon la revendication 2, caractérisé en ce que le mélange contient 10 à 200 parties en poids d'une matière concentrée capable de fermenter et 10 à 2000 parties en poids du sucre par partie en poids de levure, le rapport de la matière concentrée qui peut fermenter au sucre étant compris entre 1/8 et 8/1 en poids.

4. Ensemble de fermentation selon l'une quelconque des revendications 1, 2 et 3, caractérisé en ce que le sac est enveloppé dans un dispositif de retenue lui permettant de supporter des pressions internes auxquelles il est soumis pendant l'utilisation.

5. Ensemble de fermentation selon la revendication 4, caractérisé en ce que le dispositif de retenue est sous forme d'un sac externe dans lequel est logé le sac.

FIG. 1

FIG.2

0 071 365